# EUROPEAN PATENT SPECIFICATION

(11) **EP 2 947 897 B1**
(45) Date of publication and mention of the grant of the patent: **01.05.2019**
(21) Application number: 13864576.7
(22) Date of filing: 28.06.2013
(51) Int. Cl.: H04R 17/00, H01L 41/083, H01L 41/09, H04M 1/03, H04R 1/02, H04R 1/06, H04R 1/28, H04R 7/04

(54) **ACOUSTIC GENERATOR, ACOUSTIC GENERATION DEVICE, AND ELECTRONIC DEVICE**
KLANGGENERATOR, KLANGERZEUGUNGSVORRICHTUNG UND ELEKTRONISCHE VORRICHTUNG
GÉNÉRATEUR ACOUSTIQUE, DISPOSITIF DE GÉNÉRATION ACOUSTIQUE ET DISPOSITIF ÉLECTRONIQUE

(30) Priority: 17.12.2012 JP 2012275132; 21.12.2012 JP 2012280204
(43) Date of publication of application: 25.11.2015
(73) Proprietor: KYOCERA Corporation, Kyoto 612-8501 (JP)
(72) Inventor: OKAMURA, Takeshi, Kyoto-shi Kyoto 612-8501 (JP); TERAZONO, Masaki, Kyoto-shi Kyoto 612-8501 (JP); KAMITANI, Satoru, Kyoto-shi Kyoto 612-8501 (JP)
(74) Representative: Viering, Jentschura & Partner mbB Patent- und Rechtsanwälte
(86) International application number: PCT/JP2013/067921
(87) International publication number: WO 2014/097668

(56) References cited:
- WO-A1-2014/091785
- JP-A- 2001 275 190
- JP-A- 2001 275 190
- JP-A- 2004 023 436
- JP-A- 2012 110 018
- JP-B2- 3 160 070
- JP-U- S59 129 290
- JP-U- S62 109 600
- JP-U- S62 109 600
- KR-A- 20110 137 697
- US-A1- 2010 158 283

## Description

### Field

The embodiments disclosed herein relate to an acoustic generator, an acoustic generation device, and an electronic device.

### Background

Acoustic generators using a piezoelectric element have been conventionally known for example from documents JP2004023436, JP2001275190, US2010/158283 and JP3160070. Such an acoustic generator outputs sound by applying a voltage to a piezoelectric element mounted on a vibrating plate, thereby causing the vibrating plate to vibrate to actively use resonance of the vibration.

In addition, such an acoustic generator can be formed thin and with a light weight in comparison with common electromagnetic speakers, because a thin film such as a resin film can be used as the vibrating plate.

In the case of using a thin film as the vibrating plate, the thin film requires support in a state of being provided with uniform tension by being held in a thickness direction between, for example, a pair of frame members, to obtain excellent acoustic conversion efficiency.

US 2010/158283 A1 discloses a piezoelectric speaker including a piezoelectric thin film, electrodes formed on an upper surface or upper and lower surfaces of the piezoelectric thin film, a damping material layer formed on the lower surface of the piezoelectric thin film, and a frame attached around at least one of the piezoelectric thin film and the damping material layer using an adhesive.

### Summary

### Technical Problem

Because such a conventional acoustic generator actively makes use of the resonance of the vibrating plate provided with uniform tension, the sound pressure frequency characteristics often indicate peaks (frequencies resulting in a higher sound pressure than those achieved with nearby frequencies) and dips (frequencies resulting in a lower sound pressure than those achieved with nearby frequencies), and it has been therefore difficult to achieve high quality sound.

One aspect of the embodiment is made in consideration of the above, and an object of the embodiment is to provide an acoustic generator, an acoustic generation device, and an electronic device capable of achieving excellent sound pressure frequency characteristics. Solution to Problem

The present invention provides an acoustic generator according to claim 1, an acoustic generation device according to claim 8, and an electronic device according to claim 9. Further advantageous embodiments of the present invention are disclosed in the dependent claims.

### Advantageous Effects of Invention

With one aspect of the embodiment, excellent sound pressure frequency characteristics can be achieved.

### Brief Description of Drawings

FIG. 1A is a schematic plan view of a basic acoustic generator.
FIG. 1B is a first cross sectional view along the line A-A' in FIG. 1A.
FIG. 1C is a second cross sectional view along the line A-A' in FIG. 1A.
FIG. 2 is a schematic illustrating an example of sound pressure frequency characteristics.
FIG. 3A is a first schematic plan view illustrating an example of a structure of an acoustic generator.
FIG. 3B is a second schematic plan view illustrating an example of the structure of the acoustic generator.
FIG. 3C is a cross sectional view along the line B-B' in FIG. 3B.
FIG. 3D is a cross sectional view along the line C-C' illustrating a modification of FIG. 3A.
FIG. 3E is an enlarged view of part H illustrated in FIG. 3D.
FIG. 4A is a schematic perspective view for explaining portions of a frame member.
FIG. 4B is a schematic plan view for explaining the portions of the frame member.
FIG. 5A is a first schematic plan view illustrating a modification of a terminal plate or terminals.
FIG. 5B is a second schematic plan view illustrating a modification of the terminal plate or the terminals.
FIG. 5C is a third schematic plan view illustrating a modification of the terminal plate or the terminals.
FIG. 5D is a fourth schematic plan view illustrating a modification of the terminal plate or the terminals according to the invention.
FIG. 5E is a schematic perspective view illustrating one of modifications of the terminal plate.
FIG. 5F is a schematic cross sectional view illustrating one of modifications of the terminal.
FIG. 5G is a cross sectional view along the line B-B' illustrating a modification of FIG. 3B.
FIG. 5H is a fifth schematic plan view illustrating a modification of the terminal plate or the terminals.
FIG. 5I is a sixth schematic plan view illustrating a modification of the terminal plate or the terminals.
FIG. 5J is a seventh schematic plan view illustrating a modification of the terminal plate or the terminals.
FIG. 6A is a diagram illustrating a configuration of the acoustic generation device according to one embodiment.
FIG. 6B is a diagram illustrating a configuration of an electronic device according to one embodiment. Description of Embodiments

Embodiments of an acoustic generator, an acoustic generation device, and an electronic device that are disclosed by the present application will now be explained in detail with reference to the appended drawings. The embodiments described hereunder are not intended to limit the scope of the present invention in any way.

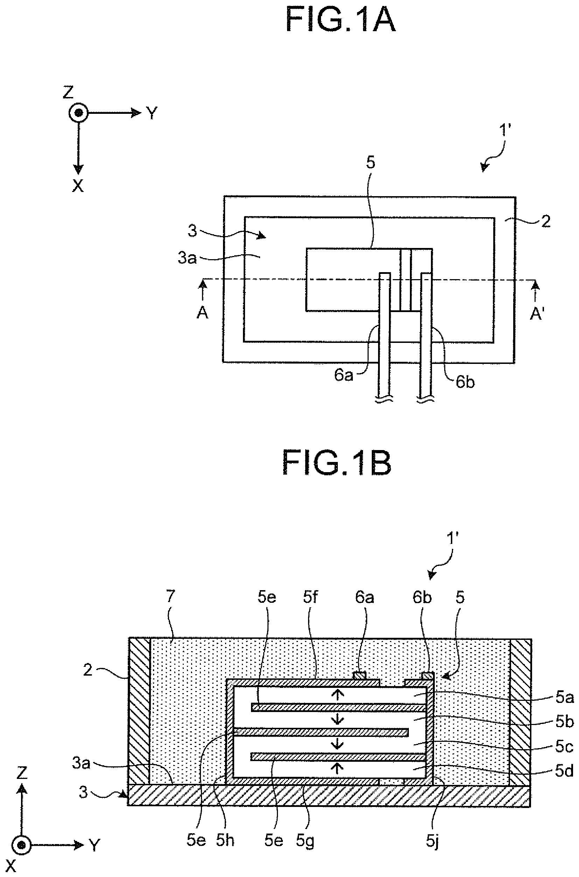

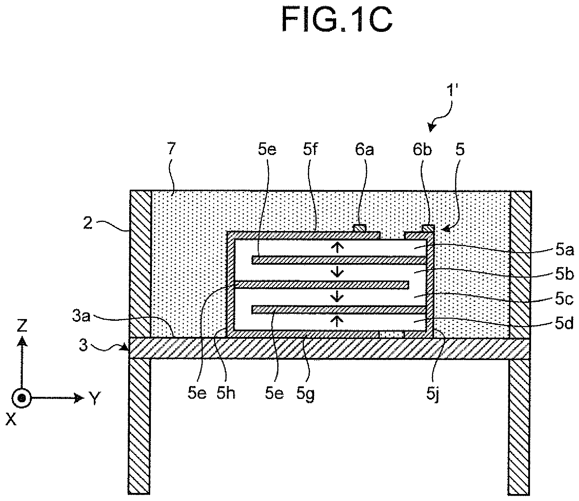

Before explaining an acoustic generator 1, a general structure of a basic acoustic generator 1' will now be explained with reference to FIGS. 1A to 1C. FIG. 1A is a schematic plan view of the acoustic generator 1', FIG. 1B is a first cross sectional view along the line A-A' in FIG. 1A, and FIG. 1C is a second cross sectional view along the line A-A' in FIG. 1A.

To facilitate understanding of the explanation, included in FIGS. 1A, 1B, and 1C is a three-dimensional Cartesian coordinate system having a Z axis the positive direction of which extends perpendicularly upwardly and the negative direction of which extends perpendicularly downwardly. This Cartesian coordinate system is included in some of the drawings referred to in the following explanation.

A resin layer 7 (described later) is omitted in FIG. 1A. Also to facilitate understanding of the explanation, illustrated in FIG. 1B and FIG. 1C is the acoustic generator 1' the thickness direction of which (Z-axial direction) is exaggeratingly enlarged.

As illustrated in FIG. 1A, the acoustic generator 1' includes a frame 2, a vibrating plate 3, a piezoelectric element 5, and lead wires 6a and 6b. Explained below is an example in which the piezoelectric element 5 is provided in singularity as illustrated in FIG. 1A, but the number of the piezoelectric element 5 is not limited to one.

As illustrated in FIG. 1B as an example, the frame 2 functions as a support for supporting the vibrating plate 3 at ends of the vibrating plate 3. The vibrating plate 3 has a plate-like or a film-like shape the ends of which are fixed by the frame 2, to be supported in a state of being substantially flat and provided with uniform tension in the frame 2.

In the example illustrated in FIG. 1C, the frame 2 has two frame members having the same rectangular, frame-like shape, and nipping the ends of the vibrating plate 3 therebetween, thereby allowing the frame 2 to serve as a support for supporting the vibrating plate 3. The vibrating plate 3 has a plate-like or a film-like shape the ends of which are nipped and fixed by the frame 2. In other words, the vibrating plate 3 is supported in a state of being substantially flat and provided with uniform tension in the frame 2.

In this case, the vibrating plate 3 can be stably stretched by nipping the vibrating plate 3 by the two frame members. This structure is better because it improves the frequency characteristics of the acoustic generator 1' to those that are durable and do not fluctuate for a long time.

The inner portion of the vibrating plate 3, being inner with respect to the internal circumference of the frame 2, and that is not nipped by the frame 2 and is capable of freely vibrating serves as a vibrating portion 3a. The vibrating portion 3a is an approximately rectangular portion that is on the inner side of the frame 2.

The vibrating plate 3 may be made of various types of materials, such as a resin or a metal. For example, the vibrating plate 3 may be a film made of a resin such as polyethylene, polyimide, and polypropylene and having a thickness of 10 micrometers to 200 micrometers. Because resin films are a material having a lower elastic modulus and a lower mechanical Q value than those of metal plates and the like, the vibrating plate 3 formed of a resin film can be bent and vibrated with a large amplitude, and enables reduction in difference between the resonance peak and the dip by increasing the width of the resonance peak and lowering the height of the resonance peak in sound pressure frequency characteristics. A composite material of a metal and a resin may be used as the vibrating plate 3.

The thickness, the material, and the like of the frame 2 are not particularly limited. The frame 2 may be made of various types of materials such as a resin or a metal. For example, the frame 2 may be preferably made of stainless steel with a thickness of 100 micrometers to 1000 micrometers, from the viewpoint of mechanical strength and high corrosion resistance.

Illustrated in FIG. 1A is the frame 2 the internal area of which has an approximately rectangular shape, but the shape may also be a polygonal shape such as a parallelogram, a trapezoid, or a regular polygon. Explained is an example in which the frame 2 has an approximately rectangular shape, as illustrated in FIG. 1A.

The piezoelectric element 5 is provided by being bonded to the surface of the vibrating portion 3a, for example, and serves as an exciter that receives an application of a voltage and excites the vibrating portion 3a.

The piezoelectric element 5 includes a laminate of four piezoelectric layers 5a, 5b, 5c, and 5d that are made of ceramic and laminated alternatingly with three internal electrode layers 5e, surface electrode layers 5f and 5g provided on the top and the bottom surfaces of the laminate, respectively, and external electrodes 5h and 5j provided on respective sides where the internal electrode layers 5e are exposed, as illustrated in FIG. 1B or FIG. 1C. To the external electrodes 5h and 5j, the lead wires 6a and 6b are connected, respectively. The lead wires 6a and 6b are leads that receive electrical signals from outside.

The piezoelectric element 5 has a plate-like shape the principal surfaces of which at the top and the bottom have a polygonal shape such as a rectangle or a square. The piezoelectric layers 5a, 5b, 5c, and 5d are polarized in the directions indicated by the arrows in FIG. 1B or 1C. In other words, the piezoelectric layers 5a, 5b, 5c, and 5d are polarized in opposite directions on one side and the other side in the thickness direction (Z-axial direction in FIG. 1B or 1C), with respect to the direction of the electric field applied at a particular moment.

When a voltage is applied to the piezoelectric element 5 via the lead wires 6a and 6b, the piezoelectric layers 5c and 5d on the side bonded on the vibrating portion 3a shrink, and the piezoelectric layers 5a and 5b on the top surface side of the piezoelectric element 5 stretch and deform, for example, at one particular moment. By applying an alternating-current signal to the piezoelectric element 5, the piezoelectric element 5 is caused to bend and vibrate, thereby causing the vibrating portion 3a to bend and vibrate.

As described above, the piezoelectric layers 5a and 5b on the top surface side of the piezoelectric element 5 and the piezoelectric layers 5c and 5d on the bottom surface side thereof exhibit stretching and shrinking behaviors conflicting each other. Consequently, the piezoelectric element 5 is caused to bend and vibrate in a bimorph manner, to apply fixed vibration to the vibrating portion 3a to generate sound. Because the piezoelectric element 5 is a laminated bimorph piezoelectric vibrating element and the piezoelectric element 5 itself bends and vibrates by itself, strong vibration can be generated regardless of the material of the vibrating portion 3a, for example, even with soft vibrating portion 3a, and sufficient sound pressure can be obtained with piezoelectric elements 5 of a small number.

A principal surface of the piezoelectric element 5 is bonded to a principal surface of the vibrating portion 3a using an adhesive such as epoxy-based resin.

Examples of materials with which the piezoelectric layers 5a, 5b, 5c, and 5d are formed include piezoelectric ceramics that have been conventionally used such as lead zirconate titanate or lead-free piezoelectric materials such as a Bi-layered compound and a tungsten bronze structure compound.

Various types of metallic materials may be used for the internal electrode layers 5e. When a material with a metallic component consisting of silver and palladium, and a ceramic component used in the piezoelectric layers 5a, 5b, 5c, and 5d, for example, are included, a stress caused by the difference in the thermal expansions in the piezoelectric layers 5a, 5b, 5c, and 5d and the internal electrode layers 5e can be reduced, so that the piezoelectric element 5 with no defective lamination can be achieved.

The surface electrode layers 5f and 5g and the external electrodes 5h and 5j are formed of metal, such as silver, as a main component. The surface electrode layers 5f and 5g and the external electrodes 5h and 5j may contain a glass component. A glass component contained therein enables strong adhesion of the piezoelectric layers 5a, 5b, 5c, and 5d and the internal electrode layers 5e, to the surface electrode layers 5f and 5g or the external electrodes 5h and 5j. The content of the glass component is, for example, 20 percent by volume or less.

The lead wires 6a and 6b are an example of leads. Each of the lead wires 6a and 6b has one end connected to the piezoelectric element 5 to input an electrical signal to the piezoelectric element 5. The lead wires 6a and 6b may be made of various types of metallic materials. When the lead wires 6a and 6b are provided using flexible wiring in which a foil made of a metal such as copper or aluminum is interposed between resin films, for example, a low-profile piezoelectric element 5 can be provided.

The acoustic generator 1' also includes, as illustrated in FIG. 1B or FIG. 1C, the resin layer 7 that is provided covering the piezoelectric element 5 and the surface of the vibrating portion 3a on the inner side of the frame 2, and is integrated with the vibrating portion 3a and the piezoelectric element 5.

For the resin layer 7, a material such as an acrylic-based resin may be used, and the resin layer 7 is preferably formed in such a manner that a Young's modulus within a range from 1 megapascal to 1 gigapascal is achieved. By embedding the piezoelectric element 5 in the resin layer 7, an appropriate level of damper effect can be achieved, so that the resonance can be suppressed and the peaks and the dips in the sound pressure frequency characteristics can be reduced.

Furthermore, illustrated in FIG. 1B or FIG. 1C is an example in which the resin layer 7 is provided to the same height as the height of the frame 2, but the resin layer 7 may be provided to a height that is higher than the height of the frame 2. Conversely, the resin layer 7 may not be necessarily provided to cover the piezoelectric element 5 and the surface of the vibrating portion 3a. It suffices that the resin layer 7 covers the piezoelectric element 5 and at least part of the surface of the vibrating portion 3a on the side where the piezoelectric element 5 is disposed.

As described above, the vibrating portion 3a, the piezoelectric element 5, and the resin layer 7 are integrated, to form a composite vibrating portion that integrally vibrates.

Illustrated in FIG. 1B or FIG. 1C is an example in which the piezoelectric element 5 is a laminated bimorph piezoelectric element, but the piezoelectric element 5 is not limited thereto. For example, the piezoelectric element 5 may be a unimorph piezoelectric element that is a deformable piezoelectric element 5 bonded to the vibrating portion 3a.

As illustrated in FIG. 1A to FIG. 1C, the vibrating portion 3a is supported substantially flat in a state of being provided with uniform tension inside the frame 2. In such a case, because peak dips and distortions are caused by resonance induced by vibration of the piezoelectric element 5, the sound pressure steeply changes at a certain frequency, and the sound pressure frequency characteristics are not easily flattened.

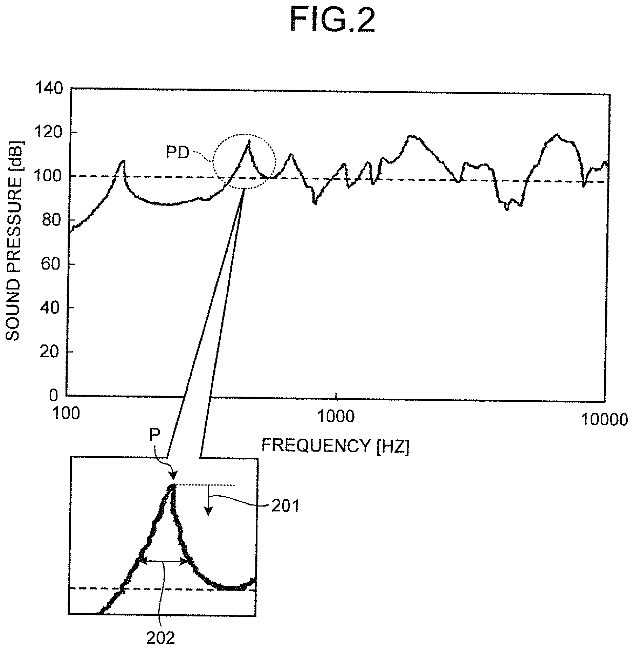

FIG. 2 illustrates the above point. FIG. 2 is a a schematic illustrating an example of sound pressure frequency characteristics. As already described in the explanation of FIG. 1A, the vibrating portion 3a is supported substantially flat in a state of being provided with uniform tension inside the frame 2.

In such a case, the peaks concentrate and degenerate at a certain frequency due to resonance of the vibrating portion 3a, so that the peaks and the dips tend to become steep and be scattered over the whole frequency regions, as illustrated in FIG. 2.

As an example, let us focus on the portion surrounded by the closed curve PD drawn with a dotted line in FIG. 2. With such a peak, the sound pressure becomes varied depending on the frequency, so that it becomes difficult to achieve high-quality sound.

In such a case, it is effective to take an approach of reducing the height of the peak P (see the arrow 201 in FIG. 2), and of increasing the peak width (see the arrow 202 in FIG. 2) so that the difference between the peak P and the dip (not illustrated) is reduced, as illustrated in FIG. 2.

The frame 2 is focused on hereunder. As described above, the frame 2 is a support that supports the vibrating portion 3a while uniformly applying tension to the vibrating portion 3a. When the vibrating portion 3a vibrates, the frame 2 itself also vibrates by the resonance of the vibrating portion 3a. The frame 2 returns reflected waves to the vibrating portion 3a. Accordingly, the frame 2 can be regarded as one of constituent elements of the composite vibrating portion that integrally vibrates.

For this reason, in the present example, the principal surface of the frame 2 is provided with terminals serving as connecting points from the outside to the lead wires 6a and 6b, to disturb reflected waves returned from the frame 2 to the vibrating portion 3a, by disturbing vibrating waves around the "terminals". In this manner, the resonance frequency is made partly uneven to remove degeneration of the resonance mode and achieve distribution. In this manner, the height of the peak P is reduced, and the peak width is increased.

In addition, according to the present example, the "terminals" are provided in portions shifted from the center of the side of the frame 2, to provide the whole composite vibrating portion with an asymmetrical shape and reduce symmetry of the reflected waves. With this structure, the resonance frequency is made partly uneven, to reduce the height of the peak P and increase the peak width.

The frame 2 that is made asymmetrical enables distribution of the degenerate vibration mode of the frame 2 to a plurality of resonance modes, and smoothing the peak shape of the sound pressure at the resonance frequency of the frame 2. This structure consequently reduces the difference between the resonance peak and the dip in the sound pressure frequency characteristics of the whole composite vibrating portions, and suppresses the sound pressure frequency fluctuations as much as possible, to improve the sound quality. In particular, when an electrical signal is input to the "terminals", the degenerate vibration mode can be further distributed, because the temperature of the frame 2 changes in the vicinity of the "terminals" and causes expansion and contraction to cause distortion of the frame 2.

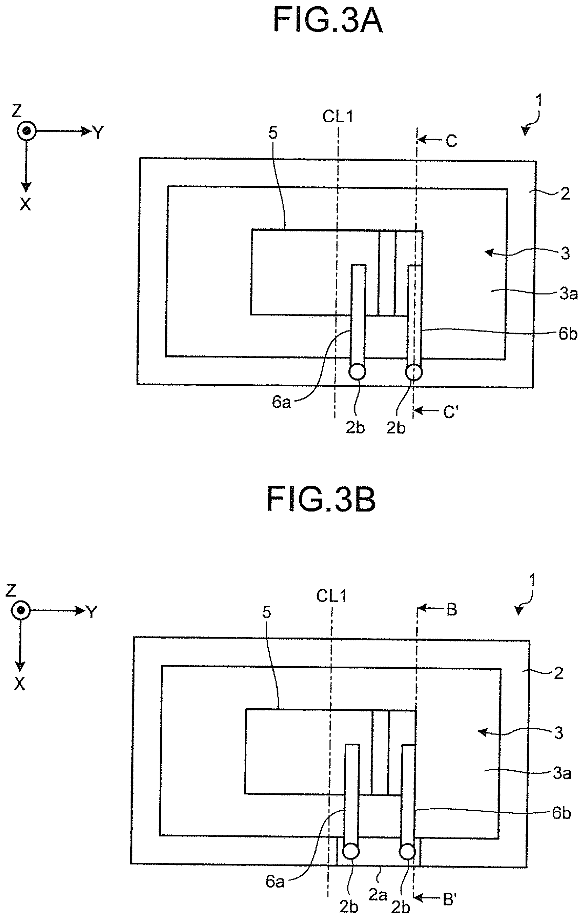

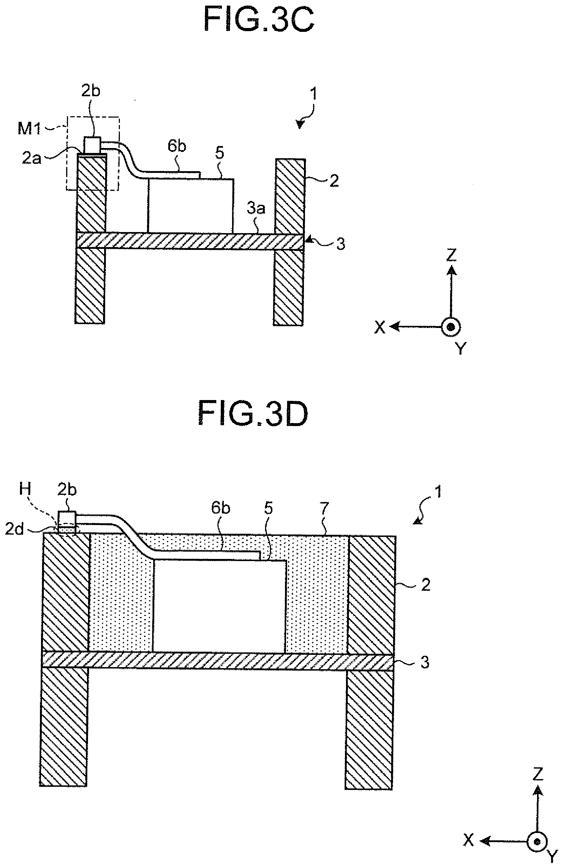

The acoustic generator 1 according to one example will be specifically explained hereinafter with reference to FIG. 3A to FIG. 5J successively. First of all, FIG. 3A is a first schematic plan view illustrating an example of a structure of the acoustic generator 1. FIG. 3B is a second schematic plan view illustrating an example of the structure of the acoustic generator 1. FIG. 3C is a cross sectional view along the line B-B' in FIG. 3B.

The resin layer 7 may be omitted in the following drawings including the schematic plan views of FIG. 3A and FIG. 3B, in the same manner as FIG. 1A, for the sake of convenience of explanation.

As illustrated in FIG. 3A, the acoustic generator 1 includes terminals 2b in addition to the components of the acoustic generator 1' illustrated in FIG. 1A to FIG. 1C. The terminals 2b are electrode terminals serving as connecting points from the outside. The frame 2 is provided with one or more terminals 2b. FIG. 3A illustrates an example where the frame 2 is provided with a plurality of (two in this example) terminals 2b. This structure further distributes the degenerate vibration mode, and further smoothens the peak shape of the sound pressure at the resonance frequency.

When a plurality of terminals 2b are provided, it is more effective that at least one of the terminals 2b has a polarity different from the polarity of the other terminals 2b. Specifically, because the terminals 2b having different polarities have different signal components, the temperatures around the respective terminals 2b increase differently from each other. This structure enables further disturbance of the transmitted vibrating waves, and consequently causes the resonance frequency to become partly uneven.

Because the terminals 2b are connected to the piezoelectric element 5 through the lead wires 6a and 6b, the terminals 2b can collect vibration around the piezoelectric element 5 via the lead wires 6a and 6b. With this structure, the vibrating waves can be further effectively disturbed around the terminals 2b.

The terminals 2b are preferably provided to the frame 2, for example, with an intermediate layer 2d interposed therebetween. In the case where the frame 2 is formed of a metallic material, each of the terminals 2b includes, for example, a portion serving as a connecting point and formed of a metallic material, and a portion contacting the frame 2 and formed of an insulating material, and mounted to the frame 2 with the intermediate layer 2d interposed therebetween.

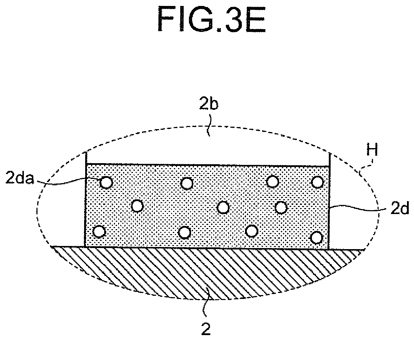

This point will be explained hereinafter with reference to FIG. 3D and FIG. 3E. FIG. 3D is a cross sectional view along the line C-C' in FIG. 3A, and FIG. 3E is an enlarged view of part H illustrated in FIG. 3D.

As illustrated in FIG. 3D, the terminals 2b are fixed to the principal surface of the frame 2 with the intermediate layer 2d interposed between them. The terminals 2b are connected with the other ends of the lead wires 6a and 6b, respectively.

The intermediate layer 2d is, for example, an adhesive, and serves as a member having a Young's modulus (E) lower than that of the frame 2. As described above, the terminals 2b are fixed to the frame 2 with the intermediate layer 2d having a Young's modulus (E) lower than that of the frame 2 and interposed between them. A material having a low Young's modulus (E) generally has a small mechanical Q value, that is, has a large mechanical loss. For this reason, such intermediate layer 2d provided absorbs vibration of the frame 2, and further disturbs vibration of the frame 2 in portions where the terminals 2b are provided. This structure enables further flattening of the sound pressure, and further improvement in sound quality. In addition, vibration of the frame 2 is attenuated when transmitted to the terminals 2b. This structure produces the effect of reducing deterioration due to vibration of the terminals 2b, and improving durability.

In the case where both the frame 2 and the terminals 2b are formed of metal, the intermediate layer 2d desirably has insulating property. Vibration of the frame 2 can be more disturbed while insulation between the frame 2 and the terminals 2b are secured, by fixing the terminals 2b to the frame 2 with the insulating intermediate layer 2d interposed between them as described above.

The intermediate layer 2d may have a structure having three layers formed of, for example, an adhesive, an insulating layer, and an adhesive. When the portion of the terminals 2b contacting the frame 2 or the frame 2 is formed of an insulating material such as a resin, the intermediate layer 2d does not necessarily have insulating property.

In addition, as illustrated in FIG. 3E, the intermediate layer 2d preferably includes pores 2da inside, that is, voids.

Because regions having different Young's moduli are scattered in the intermediate layer 2d by providing pores 2da in the intermediate layer 2d, the resonance energy is absorbed in the regions, and the peak shape of the sound pressure at the resonance frequency is caused to become gentle. As a result, the difference between the resonance peak and the dip is reduced in the sound pressure frequency characteristics, and the frequency characteristics can be flattened. The pores 2da preferably have a spherical shape to easily absorb stress and the resonance energy from all the directions in the intermediate layer 2d.

The terminals 2b may be fixed to any of the external side surfaces of the frame 2, the principal surface of the frame 2 on the side where the piezoelectric element 5 is provided to the vibrating portion 3a and on the opposite side. In particular, the piezoelectric element 5 is preferably fixed to the principal surface of the frame 2 on the side where the piezoelectric element 5 is provided. This structure enables suppression of the resonance of the frame 2 caused by vibration generated from the piezoelectric element 5 and transmitted in the air, and improvement in sound quality.

The terminals 2b are disposed on the same side as the other constituent elements such as the piezoelectric element 5 and the resin layer 7 with respect to the vibrating surface of the vibrating portion 3a. This structure produces the effect of reducing the symmetry of the whole composite vibrating portion with respect to the vibrating surface of the vibrating portion 3a, and distributing the resonance frequency of the whole composite vibrating portion.

As illustrated in FIG. 3D, the lead wires 6a and 6b are preferably connected in a loose state between the terminals 2b and the piezoelectric element 5. Because this structure enables attenuation of vibration transmitted from the terminals 2b to the piezoelectric element 5, this structure enables reduction in noise transmitted to the piezoelectric element 5 serving as the vibrating source, and generation of clear sound with high sound quality. Because this structure also enables suppression of stress on the terminals 2b and the piezoelectric element 5, this structure improves durability, and extends the life of the product.

The terminals 2b are preferably formed of a material softer than, that is, having a smaller elasticity than the material of the frame 2, from the viewpoint of suppressing generation of noise. This structure enables attenuation of vibration generated in the frame 2, and also enables reduction in noise transmitted to the piezoelectric element 5.

Each of the terminals 2b may be provided with a hole portion such as a through hole. The terminals 2b each provided with such a hole portion are capable of distributing the degenerate vibrating mode of the frame 2, further disturbing vibration of the frame 2 in the hole portion, and disturbing reflected waves to the vibrating portion 3a. This structure enables smoothing the peak shape of the sound pressure of the whole composite vibrating portion at the resonance frequency.

As illustrated in FIG. 3B, the terminals 2b may be provided to the frame 2 with a terminal plate 2a interposed between them. The terminal plate 2a is a substrate provided to the frame 2. A glass epoxy substrate or the like may be preferably used as the terminal plate 2a.

At least one terminal 2b is provided on the terminal plate 2a as described above. FIG. 3 illustrates an example of the case where two terminals 2b are provided on the terminal plate 2a, but the example does not limit the number of the terminals 2b per terminal plate 2a.

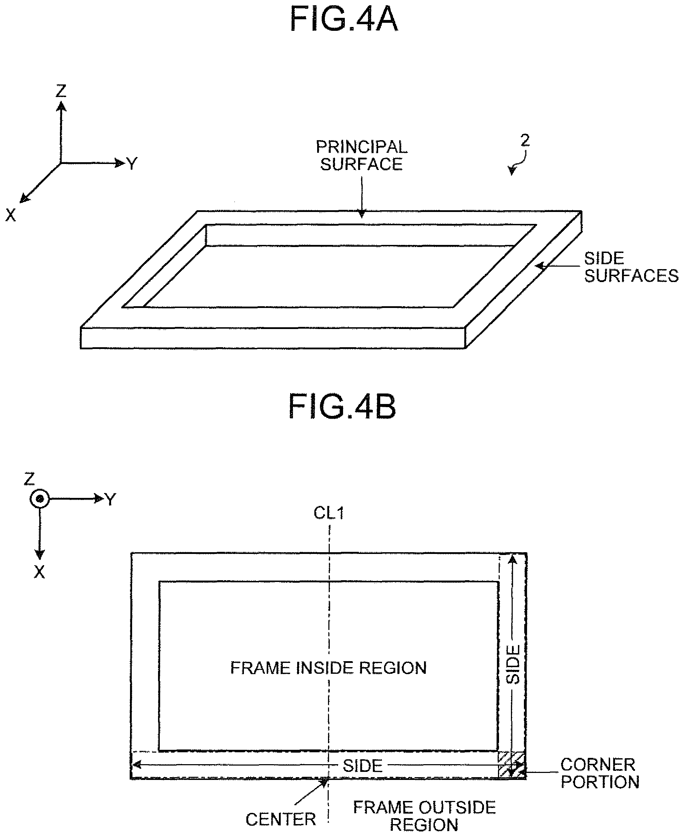

The names of the portions of the frame 2 will be described hereinafter with reference to FIG. 4A and FIG. 4B, from the viewpoint of facilitating understanding of the following explanation. FIG. 4A is a schematic perspective view for explaining portions of the frame 2, and FIG. 4B is a schematic plan view for explaining the portions of the frame 2. FIG. 4A illustrates only one of the two frame members forming the frame 2.

As illustrated in FIG. 4A, end surfaces that are parallel with the XY plane in the end surfaces of the frame 2 are expressed as "principal surfaces". End surfaces that are parallel with the XZ plane or the YZ plane in the end surfaces of the frame 2 are expressed as "side surfaces".

As illustrated in FIG. 4B, the ribs in the longitudinal direction or the short length direction are expressed as "sides". The portions in each of which a side and a side overlap each other are expressed as "corner portions" (see the diagonal region covered with diagonal lines in FIG. 4B).

The portion where the center line CL1 of the frame 2 and the "side" cross each other is expressed as "center". FIG. 4B illustrates only the "center" where the side crosses the longitudinal center line CL1, but the expression is also applicable to that in the short length direction.

FIG. 4B illustrates an example of the case where the frame 2 has a substantially rectangular shape formed of only "sides" having a straight-line shape, but the "sides" may have a curved shape as long as each of the sides is a rib having both ends.

As illustrated in FIG. 4B, the region inside the frame 2 is expressed as "frame inside region", and the region outside the frame 2 is expressed as "frame outside region".

With reference to FIG. 3A and FIG. 3B again, the acoustic generator 1 will be explained in detail. As illustrated in FIG. 3A and FIG. 3B, the terminals 2b described above are provided to the principal surface of the frame 2, to be shifted from the center of the frame 2. In relation to this, the terminal plate 2a is provided to be shifted from the center of the sides of the frame 2 toward the corner portion of the frame 2.

First of all, the effect obtained by the above structure will be explained hereinafter with respect to the terminals 2b. It has been already explained that the frame 2 itself also vibrates, being induced by the resonance of the vibrating portion 3a. Because the frame 2 having the above structure is provided with the terminals 2b, the vibrating waves transmitted through the frame 2 can be disturbed around the terminals 2b.

In particular, when an electrical signal is input to the terminals 2b, because the temperature around the terminals 2b partly increases, thermal expansion is caused to easily disturb the vibrating waves. This structure enables disturbance of the reflected waves returned from the frame 2 to the vibrating portion 3a.

As a result, because the resonance frequency is caused to become partly uneven, the peak P of the sound pressure of the resonance point is varied, and the sound pressure frequency characteristics can be flattened. Specifically, excellent sound pressure frequency characteristics can be obtained.

Because the terminals 2b are provided on the principal surface side of the frame 2 serving as the side on which the sound generated by the acoustic generator 1 is transmitted, the vibrating waves induced by the sound signal are caused to easily vibrate the terminals 2b.

Accordingly, the transmitted vibrating waves are caused to be easily disturbed around the terminals 2b, and consequently the resonance frequency is caused to be partly uneven. Specifically, the peak P of the sound pressure of the resonance point is varied, and excellent sound pressure frequency characteristics can be obtained.

Because the terminals 2b are provided to be shifted from the center of the frame 2, the shape of the whole composite vibrating portion can be caused to become asymmetrical. This structure enables disturbance of the reflected waves from the frame 2 to the vibrating portion 3a, and reduction in symmetry of the reflected waves.

This structure also causes the resonance frequency to be partly uneven, and varies the peak P of the sound pressure of the resonance point, to obtain excellent sound pressure frequency characteristics.

Then, the effect produced by the terminal plate 2a will be explained hereinafter. The terminal plate 2a is provided to the frame 2, to cause the vibrating waves transmitted through the surface of the frame 2 to be reflected by a portion where the terminal plate 2a exists.

Specifically, the terminal plate 2a causes the resonance frequency to be partly uneven, and varies the peak P of the sound pressure of the resonance point, to obtain excellent sound pressure frequency characteristics.

In particular, when a glass epoxy substrate is used for the terminal plate 2a as described above, the terminal plate 2a can strongly disturb the vibrating waves around the terminal plate 2a, because the terminal plate 2a has a structure in which materials having different Young's moduli are scattered. This structure is more effective in causing the resonance frequency to be partly uneven.

Because the terminal plate 2a is provided to be shifted from the center of the side the frame 2 toward the corner portion of the frame 2, the shape of the whole composite vibrating portion can be caused to become asymmetrical. This structure enables disturbance of the reflected waves from the frame 2 to the vibrating portion 3a, and reduction in symmetry of the reflected waves. In this manner, the resonance frequency can be caused to be partly uneven. Specifically, this structure also varies the peak P of the sound pressure of the resonance point, to obtain excellent sound pressure frequency characteristics.

As illustrated in FIG. 3B, the terminal plate 2a is preferably provided between the corner portion of the frame 2 and the center of the side of the frame 2. In this case, the reflected waves from the frame 2 to the vibrating portion 3a can be disturbed more effectively, because the shape of the whole composite vibrating portion can be caused to become asymmetrical, while avoiding the corner portion where two sides cross each other and thus having high rigidity (that is, hard to vibrate).

Based on the above, the terminal plate 2a is preferably provided in the longitudinal side of the frame 2. With this structure, the symmetry of the reflected waves can be more reduced than the case of providing the terminal plate 2a in the shorter side, and the resonance frequency can be caused to be partly uneven more effectively.

The effects produced by the terminal plate 2a and the terminals 2b can be obtained synergistically, by providing the terminals 2b onto the terminal plate 2a as described above. Specifically, this structure enables varying the peak P of the sound pressure of the resonance point more effectively, to obtain excellent sound pressure frequency characteristics.

In the case where a plurality of (two in this example) terminals 2b are provided as illustrated in FIG. 3A, the terminals 2b are capable of having respective resonance peaks different from each other, and further disturbing the vibrating waves around the terminals 2b. This structure also causes the resonance frequency to be partly uneven.

Also in the case of providing a plurality of terminals 2b, it is more effective that at least one terminal 2b has a polarity different from a polarity of the other terminals 2b. Specifically, because the terminals 2b having different polarities have respective signal components different from each other, the temperatures around the respective terminals 2b increase differently from each other. This structure enables further disturbance of the vibrating waves transmitted through the terminal plate 2a, and thus causes the resonance frequency to be partly uneven.

In addition, the terminals 2b are capable of collecting vibrations around the piezoelectric element 5 via the lead wires 6a and 6b, because the terminals 2b are connected to the piezoelectric element 5 via the lead wires 6a and 6b. This structure enables further disturbance of the vibrating waves effectively around the terminals 2b.

As illustrated in FIG. 3C, the lead wires 6a and 6b (6a is not illustrated) are preferably connected in a loose state between the terminals 2b and the piezoelectric element 5. With this structure, because vibration from the terminals 2b to the piezoelectric element 5 can be attenuated, generation of noise is suppressed, and clear sound with high sound quality can be generated. This structure also improves durability, and extends the life of the product, because the structure suppresses stress on the terminals 2b and the piezoelectric element 5.

The terminals 2b are preferably formed of a material softer than the material of the frame 2, from the viewpoint of suppressing generation of noise. This structure enables attenuation of vibration generated in the frame 2, and also enables reduction in noise.

As illustrated in FIG. 3A and FIG. 3B, the terminals 2b are provided so as not to project into the frame outside region or the frame inside region of the frame 2, to control the degree of freedom of vibration of the terminals 2b themselves. This structure enables suppression of sounding from the terminals 2b, and also suppression of generation of noise.

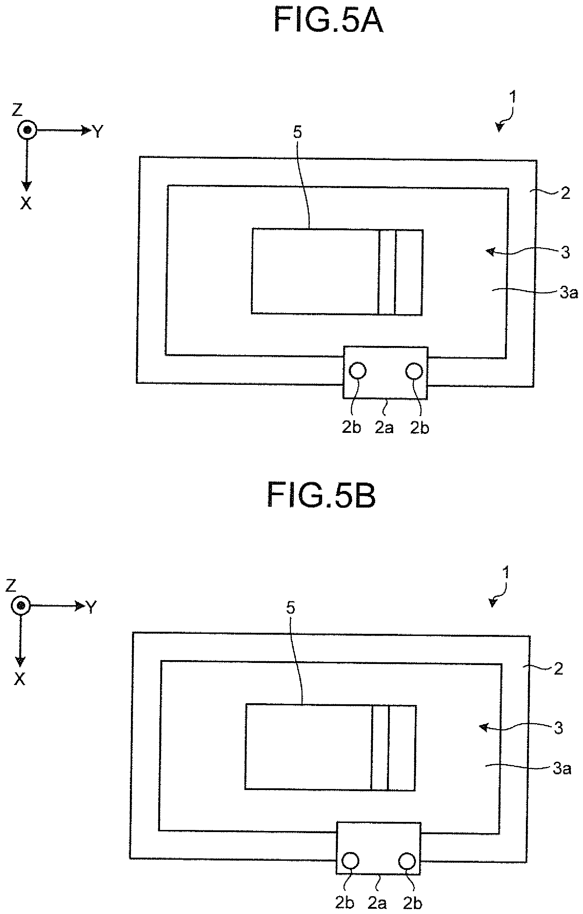

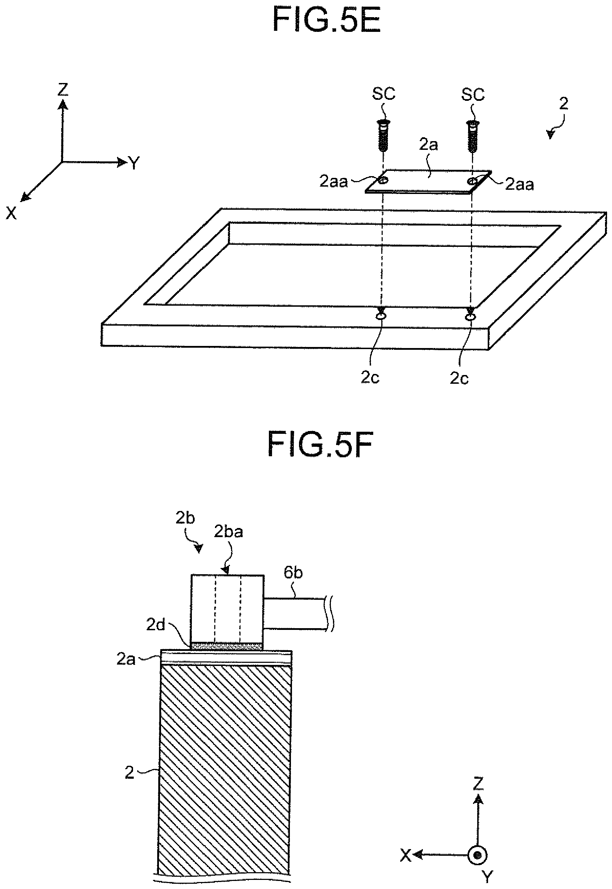

Conversely, the terminals 2b may be provided to project into the frame outside region or the frame inside region of the frame 2. This point will be explained later with reference to FIG. 5B. The part M1 enclosed by a two-dot chain line in FIG. 3C will be illustrated again as an enlarged view in the explanation with reference to FIG. 5F.

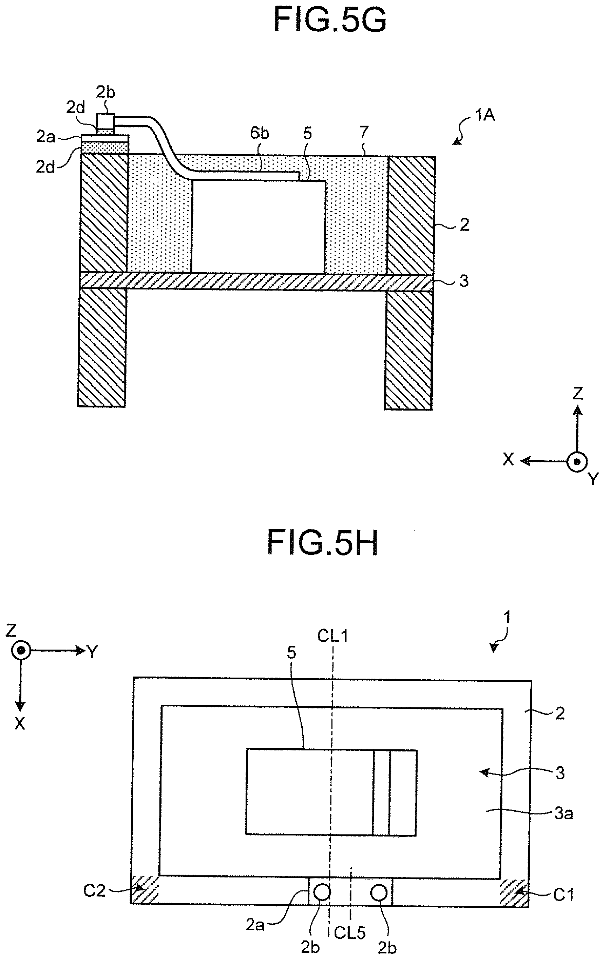

Then, modifications of the terminal plate 2a or the terminals 2b will be successively explained hereinafter, with reference to FIG. 5A to FIG. 5J. FIG. 5A to FIG. 5D and FIG. 5H to FIG. 5J are first to seventh schematic plan views successively illustrating modifications of the terminal plate 2a or the terminals 2b. FIG. 5E is a schematic perspective view illustrating one of modifications of the terminal plate 2a. FIG. 5F is a schematic cross sectional view illustrating one of modifications of the terminals 2b, and FIG. 5G is a cross sectional view along the line B-B' illustrating a modification of FIG. 3B.

First of all, as illustrated in FIG. 5A, the terminal plate 2a may be provided to project into the frame outside region or the frame inside region of the frame 2. In such a case, because the resonance frequency is shifted in the projecting portion of the terminal plate 2a even when the frame 2 vibrates due to induction by vibration of the vibrating portion 3a, the vibrating waves of the frame 2 that is transmitted around the terminals 2b can be further disturbed. As a result, the reflected waves from the frame 2 to the vibrating portion 3a can be further disturbed.

Specifically, the resonance frequency is caused to be partly uneven, and the peak P of the sound pressure of the resonance point is varied, to obtain excellent sound pressure frequency characteristics.

FIG. 5A illustrates an example of the case where the terminals 2b are provided on the terminal plate 2a so as to be located in the principal surface of the frame 2, but the terminals 2b may be provided at positions where the terminals 2b project into the frame outside region or the frame inside region of the frame 2, as illustrated in FIG. 5B. Also in this case, for the same reason as that in the case of FIG. 5A, the resonance frequency is caused to be partly uneven, and the peak P of the sound pressure of the resonance point is varied, to obtain excellent sound pressure frequency characteristics.

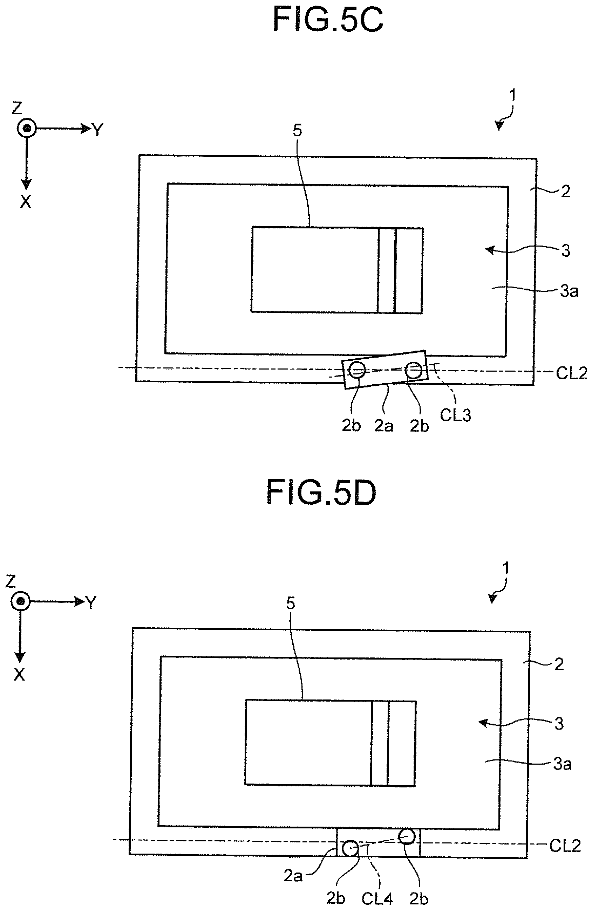

As illustrated in FIG. 5C, the terminal plate 2a may be provided to be nonparallel with the side of the frame 2 in plan view. Specifically, the center line CL2 of the side of the frame 2 is nonparallel with the center line CL3 of the terminal plate 2a in plan view.

In such a case, the resonance frequency is further shifted in the region of the terminal plate 2a even when the frame 2 vibrates due to induction by vibration of the vibrating portion 3a, because the terminal plate 2a is nonparallel with the frame 2. With this structure, the vibrating waves of the frame 2 that is transmitted around the terminals 2b can be further disturbed, and consequently the reflected waves from the frame 2 to the vibrating portion 3a can be further disturbed.

Specifically, the resonance frequency is caused to be partly uneven, and the peak P of the sound pressure of the resonance point is varied, to obtain excellent sound pressure frequency characteristics.

The nonparallel structure as described above causes the shape of the composite vibrating portion to become asymmetrical. Specifically, the symmetry of the reflected waves is reduced, to cause the resonance frequency to be partly uneven.

In relation to this, according to the invention, the terminals 2b are provided to be nonparallel with the side of the frame 2 in plan view, as illustrated in FIG. 5D. Specifically, the line CL4 connecting the two terminals 2b is nonparallel with the center line CL2 of the side of the frame 2 in plan view.

Also in this case, for the same reason as that in the case of FIG. 5C, the resonance frequency is caused to be partly uneven, and the peak P of the sound pressure of the resonance point is varied, to obtain excellent sound pressure frequency characteristics.

As illustrated in FIG. 5E, the terminal plate 2a may be provided with hole portions 2aa. For example, FIG. 5E illustrates the case where the terminal plate 2a is provided with the hole portions 2aa serving as screw holes for screws SC, and the terminal plate 2a is attached to the frame 2 by fastening the hole portions 2aa with screws to screw holes 2c provided in the frame 2. For example, the screws SC may also serve as the terminals 2b.

In relation to the example illustrated in FIG. 5E, each of the terminals 2b may be provided with a hole portion 2ba, as illustrated in FIG. 5E. In the case of providing the terminal plate 2a or the terminals 2b with holes such as the hole portions 2aa and the hole portions 2ba as described above, the reflected waves from the frame 2 to the vibrating portion 3a can be further disturbed, because vibrating waves can be formed inside the holes in response to vibration.

In the case where a joint exists between the hole and a counterpart member (for example, the frame 2), the joint can further disturb the vibrating waves and the reflected waves thereof. In addition, because the circumference of the hole can be deformed with high sound pressure, such a structure is more effective for disturbing the waves and causing the resonance frequency to be partly uneven.

As illustrated in FIG. 5F, the terminals 2b are preferably bonded to the terminal plate 2a using the intermediate layer 2d (bonding material such as an adhesive). In such a case, because each of the terminals 2b and the intermediate layer 2d disturbs the vibrating waves of the frame 2, the vibrating waves around the terminals 2b can be strongly disturbed synergistically. Specifically, this structure is also more effective in causing the resonance frequency to be partly uneven.

When the terminal plate 2a has insulating property, the intermediate layer 2d does not necessarily have insulating property. Specifically, the intermediate layer 2d that is conductive may be used. When the intermediate layer 2d has insulating property, the terminal plate 2a does not necessary have insulating property. For example, the terminal plate 2a formed of metal may be used. Specifically, at least one of the intermediate layer 2d and the terminal plate 2a should have insulating property. For this reason, the intermediate layer 2d may be a member such as a washer, as well as an adhesive. As illustrated in FIG. 5G, the terminal plate 2a as well as the terminals 2b may be bonded to the frame 2 using the intermediate layer 2d.

Although the terminal plate 2a is preferably provided between the corner portion of the frame 2 and the center of the side of the frame 2 in the explanation with reference to FIG. 3B, the embodiment is not limited thereto.

For example, as illustrated in FIG. 5H, the terminal plate 2a may overlap the center of the frame 2 with respect to the center line CL1. Specifically, even when the terminal plate 2a overlaps the center of the frame 2, it suffices that the center line CL5 of the terminal plate 2a is shifted from the center of the frame 2 toward the corner portion C1 or the corner portion C2.

This structure can also at least cause the shape of the whole composite vibrating portion to be asymmetrical, and reduces and disturbs the symmetry of the reflected waves from the frame 2 to the vibrating portion 3a. The structure is more effective when at least the terminals 2b are also provided to be shifted from the center of the frame 2, as illustrated in FIG. 5H.

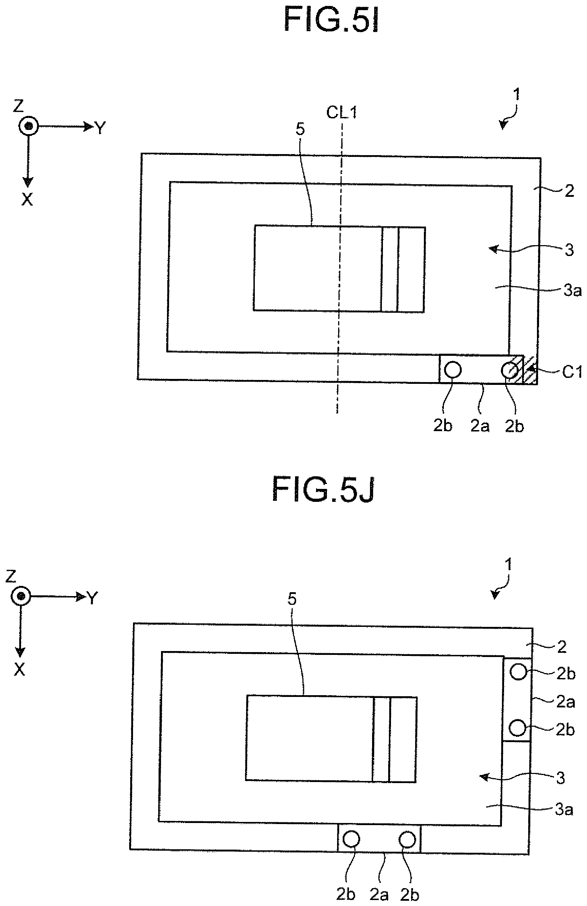

As illustrated in FIG. 5I, the terminal plate 2a may be provided to overlap the corner portion (corner portion C1 in this example) of the frame 2. This structure can also at least cause the shape of the whole composite vibrating portion to be asymmetrical, in the same manner as in the case of FIG. 5H, and reduces and disturbs the symmetry of the reflected waves from the frame 2 to the vibrating portion 3a.

As illustrated in FIG. 5J, a plurality of terminal plates 2a may be provided, as well as the terminals 2b. In this case, the second terminal plate 2a and subsequent terminal plates 2a may be provided as dummies that do not conduct electrical signals.

The terminal plates 2a and the terminals 2b provided in plurality as dummies on the frame 2 can cause disturbance of the reflected waves from the frame 2 to the vibrating portion 3a.

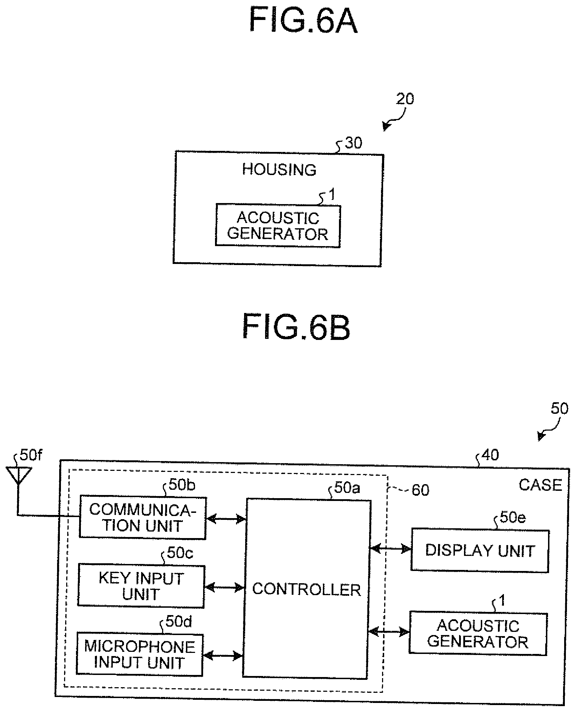

An acoustic generation device and an electronic device equipped with the acoustic generator 1 according to the embodiment described above will now be described with reference to FIG. 6A and FIG. 6B. FIG. 6A is a diagram illustrating a configuration of an acoustic generation device 20 according to one embodiment, and FIG. 6B is a diagram illustrating a configuration of an electronic device 50 according to one embodiment. These diagrams illustrate only the components required for description and do not illustrate general components.

The acoustic generation device 20 is a sound generating device such as a speaker and includes, for example, the acoustic generator 1 and a housing 30 for accommodating the acoustic generator 1, as illustrated in FIG. 6A. The housing 30 resonates sound produced by the acoustic generator 1 in the inside and emits the sound from a not-illustrated opening defined in the housing 30 to the outside. The provision of this housing 30 can enhance the sound pressure, for example, in a low frequency band.

The acoustic generator 1 may be installed in different types of electronic devices 50. For example, in FIG. 6B described below, the electronic device 50 is explained to be a mobile electronic device, such as a mobile phone or a tablet terminal.

As illustrated in FIG. 6B, the electronic device 50 includes an electronic circuit 60. The electronic circuit 60 includes, for example, a controller 50a, a communication unit 50b, a key input unit 50c, and a microphone input unit 50d. The electronic circuit 60 is connected to the acoustic generator 1, and serves to output an audio signal to the acoustic generator 1. The acoustic generator 1 generates sound based on the audio signal received from the electronic circuit 60.

The electronic device 50 also includes a display unit 50e, an antenna 50f, and the acoustic generator 1. The electronic device 50 also includes a case 40 in which these devices are housed.

Although FIG. 6B represents a state in which all of the devices including the controller 50a are accommodated in a single case 40, the manner in which the devices are accommodated is not limited to this example. In the present embodiment, at least the electronic circuit 60 and the acoustic generator 1 are accommodated in the single case 40.

The controller 50a is a control unit for the electronic device 50. The communication unit 50b exchanges data, for example, via the antenna 50f, based on the control of the controller 50a.

The key input unit 50c is an input device for the electronic device 50, and receives operations of key inputs performed by an operator. The microphone input unit 50d is also an input device for the electronic device 50, and receives operations of voice inputs of an operator.

The display unit 50e is a display output device for the electronic device 50, and outputs information to be displayed based on the control of the controller 50a.

The acoustic generator 1 operates as a sound output device in the electronic device 50. The acoustic generator 1 is connected to the controller 50a in the electronic circuit 60, and receives an application of a voltage controlled by the controller 50a and outputs sound.

Explained with reference to FIG. 6B is an example in which the electronic device 50 is a mobile electronic device, but the type of the electronic device 50 is not limited thereto, and may be used in various types of consumer devices having a function of generating sound. The electronic device 50 may be a flat television or a car stereo system, for example, and may be used in various types of products with a function outputting sound, such as those with a function of "speaking", examples of which include a vacuum cleaner, a washing machine, a refrigerator, and a microwave oven.

## Claims

1. An acoustic generator (1) comprising:
a piezoelectric element (5) that receives an input of electrical signals and is caused to vibrate, the piezoelectric element having a rectangular top principal surface and a rectangular bottom principal surface;
a vibrating plate (3) on which the bottom principal surface of the piezoelectric element (5) is mounted and that is caused to vibrate by the vibration of the piezoelectric element (5);
a rectangular frame (2) that is provided on an external circumferential portion of the vibrating plate (3), and supports the flat vibrating plate (3); and
leads (6a, 6b) that are connected to the piezoelectric element (5), and input the electrical signals to the piezoelectric element (5), the rectangular frame (2) including, on one of sides of the rectangular frame (2), a plurality of terminals (2b) serving as connection points to the leads (6a, 6b), **characterised in that** the vibrating plate (3) is formed of a resin film, and **in that** the plurality of terminals (2b) are provided such that a line connecting the centers of at least two of the terminals (2b) is nonparallel with the one side of the rectangular frame (2) in plan view.

2. The acoustic generator (1) according to claim 1, wherein the terminals (2b) are arranged apart from center of the one side of the rectangular frame (2).

3. The acoustic generator (1) according to any one of claim 1 or 2, wherein the rectangular frame (2) further includes a substrate (2a) provided to the rectangular frame (2), and the terminals (2b) are provided on the substrate (2a).

4. The acoustic generator (1) according to claim 3, wherein the substrate (2a), provided to the rectangular frame (2), is arranged apart from center of the one side of the rectangular frame (2) toward a corner portion of the rectangular frame (2).

5. The acoustic generator (1) according to claim 3 or 4, wherein the substrate (2a) is provided to be nonparallel with the one side of the rectangular frame (2) in plan view.

6. The acoustic generator (1) according to any one of claims 3 to 5, wherein the substrate (2a) is provided to project into a frame outside region or a frame inside region of the rectangular frame (2).

7. The acoustic generator (1) according to any one of claims 1 to 6, wherein the piezoelectric element (5) is a laminated bimorph piezoelectric element.

8. An acoustic generation device (20) comprising:
the acoustic generator (1) according to any one of claims 1 to 7; and
a housing (30) that accommodates the acoustic generator (1).

9. An electronic device (50) comprising:
the acoustic generator (1) according to any one of claims 1 to 7;
an electronic circuit (60) that is connected to the acoustic generator (1); and
a case (40) that accommodates the electronic circuit (60) and the acoustic generator (1), wherein
the electronic device (50) has a function of producing sound from the acoustic generator (1).

## Patentansprüche

1. Ein akustischer Generator (1), aufweisend:
ein piezoelektrisches Element (5), das einen Eingang von elektrischen Signalen empfängt und zum Schwingen gebracht wird, wobei das piezoelektrische Element eine rechteckige obere Hauptfläche und eine rechteckige untere Hauptfläche aufweist,
eine Schwingungsplatte (3), auf der die untere Hauptfläche des piezoelektrischen Elements (5) montiert ist und die durch die Schwingung des piezoelektrischen Elements (5) zum Schwingen gebracht wird,
einen rechteckigen Rahmen (2), der auf einem Außenumfangsabschnitt der Schwingungsplatte (3) vorgesehen ist und die flache Schwingungsplatte (3) abstützt, und
Leitungen (6a, 6b), die mit dem piezoelektrischen Element (5) verbunden sind und die elektrischen Signale in das piezoelektrische Element (5) eingeben,
wobei der rechteckige Rahmen (2) auf einer von Seiten des rechteckigen Rahmens (2) eine Mehrzahl von Anschlüssen (2b) aufweist, die als Anschlusspunkte zu den Leitungen (6a, 6b) dienen, **dadurch gekennzeichnet, dass** die Schwingungsplatte aus einem Harzfilm gebildet ist, und dass
die Mehrzahl von Anschlüssen (2b) derart vorgesehen ist, dass eine Linie, die die Mitten von mindestens zwei der Anschlüsse (2b) verbindet, in einer Draufsicht nicht parallel zu der einen Seite des rechteckigen Rahmens (2) ist.

2. Der akustische Generator (1) gemäß Anspruch 1, wobei die Anschlüsse (2b) entfernt von der Mitte der einen Seite des rechteckigen Rahmens (2) angeordnet sind.

3. Der akustische Generator (1) gemäß irgendeinem von Anspruch 1 oder 2, wobei der rechteckige Rahmen (2) ferner ein Substrat (2a) aufweist, das an dem rechteckigen Rahmen (2) bereitgestellt ist, und
die Anschlüsse (2b) auf dem Substrat (2a) vorgesehen sind.

4. Der akustische Generator (1) gemäß Anspruch 3, wobei das Substrat (2a), das an dem rechteckigen Rahmen (2) vorgesehen ist, entfernt von der Mitte der einen Seite des rechteckigen Rahmens (2) in Richtung zu einem Eckenabschnitt des rechteckigen Rahmens (2) angeordnet ist.

5. Der akustische Generator (1) gemäß Anspruch 3 oder 4, wobei das Substrat (2a) in einer Draufsicht nicht parallel zu der einen Seite des rechteckigen Rahmens (2) vorgesehen ist.

6. Der akustische Generator (1) gemäß irgendeinem der Ansprüche 3 bis 5, wobei das Substrat (2a) vorgesehen ist, um in einen Rahmenaußenbereich oder einen Rahmeninnenbereich des rechteckigen Rahmens (2) hervorzustehen.

7. Der akustische Generator (1) gemäß irgendeinem der Ansprüche 1 bis 6, wobei das piezoelektrische Element (5) ein laminiertes bimorphes piezoelektrisches Element ist.

8. Eine akustische Erzeugungsvorrichtung (20), aufweisend:
den akustischen Generator (1) gemäß irgendeinem der Ansprüche 1 bis 7 und
ein Gehäuse (30), das den akustischen Generator (1) aufnimmt.

9. Eine elektronische Vorrichtung (50), aufweisend:
den akustischen Generator (1) gemäß irgendeinem der Ansprüche 1 bis 7,
eine elektronische Schaltung (60), die mit dem akustischen Generator (1) verbunden ist, und
ein Gehäuse (40), das die elektronische Schaltung (60) und den akustischen Generator (1) aufnimmt, wobei
die elektronische Vorrichtung (50) eine Funktion des Erzeugens von Klang aus dem akustischen Generator (1) hat.

## Revendications

1. Un générateur acoustique (1), comprenant :
un élément piézoélectrique (5) qui reçoit une entrée de signaux électriques et est amené à vibrer, l'élément piézoélectrique présentant une surface principale supérieure rectangulaire et une surface principale inférieure rectangulaire,
une plaque vibrante (3) sur laquelle la surface principale inférieure de l'élément piézoélectrique (5) est montée et qui est amenée à vibrer par la vibration de l'élément piézoélectrique (5),
un cadre rectangulaire (2) qui est prévu sur une partie circonférentielle extérieure de la plaque vibrante (3) et soutient la plaque vibrante plate (3), et
des lignes (6a, 6b) qui sont reliées à l'élément piézoélectrique (5) et entrent les signaux électriques dans l'élément piézoélectrique (5),
le cadre rectangulaire (2) comprenant, sur un parmi des côtés du cadre rectangulaire (2), une pluralité de bornes (2b) servant de points de raccordement aux lignes (6a, 6b), **caractérisé en ce que** la plaque vibrante (3) est formée d'un film de résine, et **en ce que**
la pluralité de bornes (2b) sont prévues de sorte qu'une ligne reliant les centres d'au moins deux des bornes (2b) n'est pas parallèle audit un côté du cadre rectangulaire (2) selon une vue en plan.

2. Le générateur acoustique (1) selon la revendication 1, dans lequel les bornes (2b) sont agencées à distance du centre dudit un côté du cadre rectangulaire (2).

3. Le générateur acoustique (1) selon l'une quelconque des revendications 1 ou 2, dans lequel le cadre rectangulaire (2) comprend en outre un substrat (2a) prévu sur le cadre rectangulaire (2), et
les bornes (2b) sont prévues sur le substrat (2a).

4. Le générateur acoustique (1) selon la revendication 3, dans lequel le substrat (2a), prévu sur le cadre rectangulaire (2), est agencé à distance du centre dudit un côté du cadre rectangulaire (2) vers une partie de coin du cadre rectangulaire (2).

5. Le générateur acoustique (1) selon la revendication 3 ou 4, dans lequel le substrat (2a) est prévu de manière à être non-parallèle audit un côté du cadre rectangulaire (2) selon une vue en plan.

6. Le générateur acoustique (1) selon l'une quelconque des revendications 3 à 5, dans lequel le substrat (2a) est prévu de manière à faire saillie dans une région extérieure de cadre ou une région intérieure de cadre du cadre rectangulaire (2).

7. Le générateur acoustique (1) selon l'une quelconque des revendications 1 à 6, dans lequel l'élément piézoélectrique (5) est un élément piézoélectrique bimorphe laminé.

8. Un dispositif de génération acoustique (20), comprenant :
le générateur acoustique (1) selon l'une quelconque des revendications 1 à 7, et
un boîtier (30) qui accueillit le générateur acoustique (1).

9. Un dispositif électronique (50), comprenant :
le générateur acoustique (1) selon l'une quelconque des revendications 1 à 7,
un circuit électronique (60) qui est relié au générateur acoustique (1), et
un boîtier (40) qui accueillit le circuit électronique (60) et le générateur acoustique (1), dans lequel
le dispositif électronique (50) a une fonction de produire du son à partir du générateur acoustique (1).
